# EUROPEAN PATENT SPECIFICATION

(11) **EP 4 656 033 B1**
(45) Date of publication and mention of the grant of the patent: **27.05.2026**
(21) Application number: 25176971.7
(22) Date of filing: 16.05.2025
(51) Int. Cl.: A01D 61/00, A01D 61/02, A01D 41/14

(54) **CONVEYING DEVICE**
FÖRDEREINRICHTUNG
DISPOSITIF DE CONVOYAGE

(30) Priority: 27.05.2024 IT 202400011998
(43) Date of publication of application: 03.12.2025
(73) Proprietor: Dominoni S.r.L, 26010 Camisano (Cremona) (IT)
(72) Inventor: DOMINONI, Massimo, I-26010 Camisano (IT)
(74) Representative: Lunati & Mazzoni S.r.L.

(56) References cited:
- US-A1- 2016 345 497
- US-A1- 2021 112 715
- US-B2- 10 813 290
- US-B2- 11 419 270

## Description

The present invention relates to a conveying device of the type specified in the preamble of the first claim.

The subject of the present invention is a conveying device that finds application mainly in the field of agriculture.

Similar devices are described in patent applications US 2021/0112715 A1; US 2016/0345497 A1; US 11,419,270 B2 and US 10,813,290 B2.

Conveying apparatuses used in the reaping phase of crop plants are currently known. Typically, these devices are housed on transport means that allow harvesting to be carried out as one moves on the soil of the agricultural land.

The transport means used are typically combine harvesters, forage harvesters, etc. These means allow the simultaneous and continuous reaping, threshing and shredding of cereals in order to make harvesting and processing of agricultural products more efficient.

Combine harvesters and forage harvesters also allow reaping, threshing and shredding operations to be carried out on large agricultural areas in much less time than traditional methods.

Combine harvesters typically consist of a front harvester header that carries out the harvesting operation. This header typically includes means that allow performing the conveying and cutting of plants. In particular, the headers have a reel in the front structure, which makes it possible to approach the plant harvesting structure, a mowing bar that makes it possible to cut the upper portion of the plants to be harvested, then conveyor belts that allow the movement of the harvested plants in such a way as to convey them to the portion of the combine harvester where the actual threshing operations take place.

The prior art described comprises some important drawbacks.

In particular, the portion of the front harvester header where the plants are conveyed does not allow effective harvesting. In fact, the known structures lose a part of the reaped crop.

In addition, portions of crop or land or the like can be inserted into the structures of the harvesting header, making the transport members getting stuck or limiting their operation.

In this situation, the technical task underlying the present invention is to devise a conveying device that can substantially obviate at least part of the above-mentioned drawbacks.

Within this technical task it is an important object of the invention to obtain a conveying device that makes it possible to improve the efficiency of the harvesting process during reaping.

Another important object of the invention is to make a conveying device that allows the product to be conveyed effectively, i.e. with less loss and less clogging of the transport members.

The specified technical task and purposes are achieved by a conveying device as claimed in the appended Claim 1.

Preferred technical solutions are highlighted in the dependent claims.

The characteristics and advantages of the invention are hereafter clarified by the detailed description of preferred embodiment of the invention, with reference to the attached drawings, where:

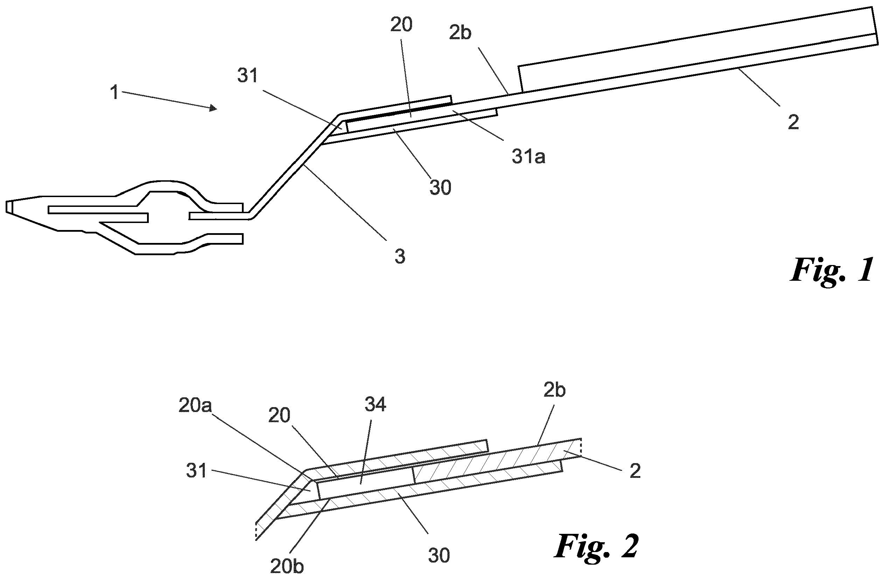

**FIG. 1** shows a side view of a conveying device according to the invention;
**FIG. 2** illustrates a cross-section of a conveying device according to the invention;

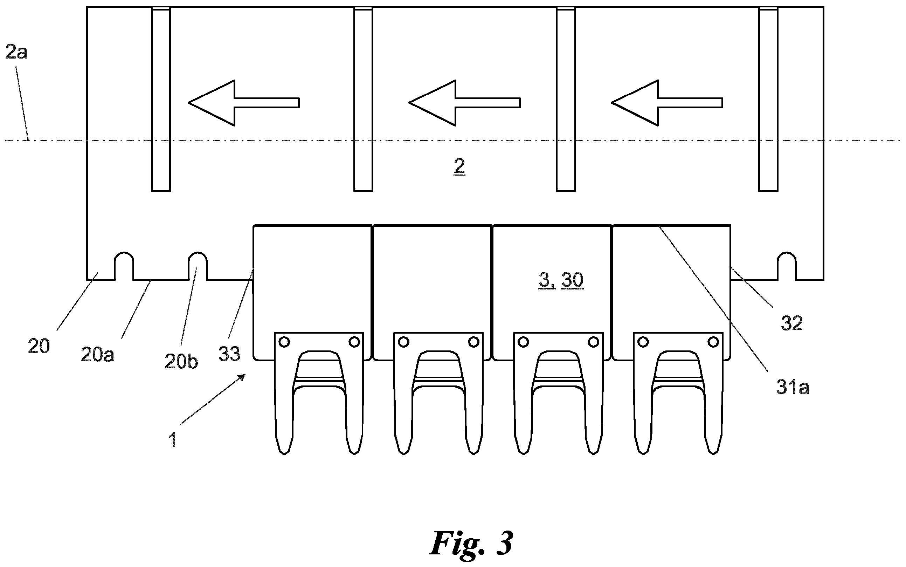

**FIG. 3** is a top view of a conveying device according to the invention;

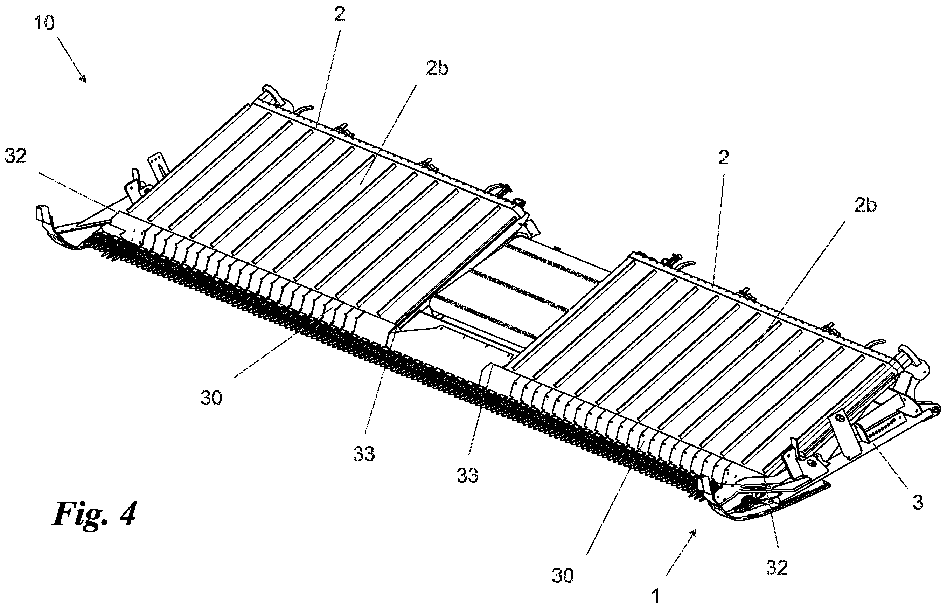

**FIG. 4** is an axonometric view of a pair of conveying devices according to the invention; and

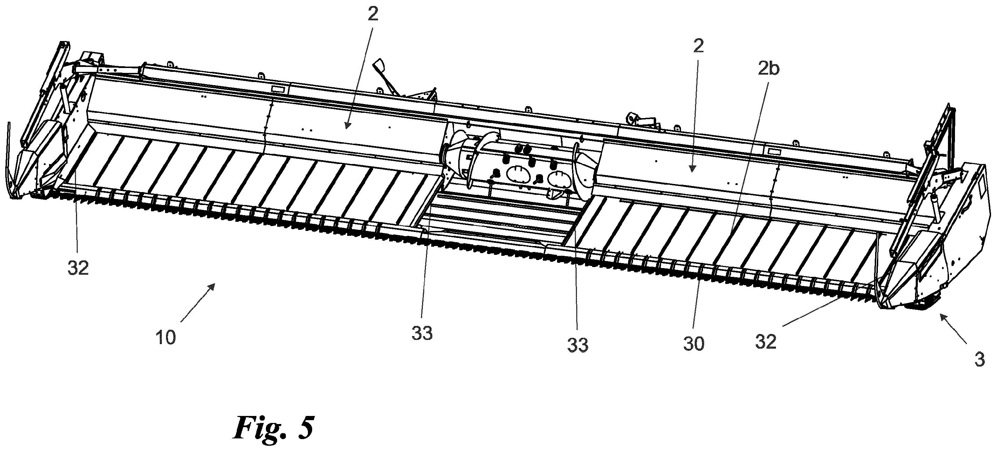

**FIG. 5** is an axonometric view of a header according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as reflected in the following discussions, terms such as "processing", "computing", "determination", "calculation", or the like are considered to refer to the action and/or processes of a computer or similar electronic computing device that manipulates and/or transforms data represented as physical, such as electronic quantities of records of a computer plant and/or memories, into other data similarly represented as physical quantities within computer plants, records, or other information storage, transmission, or display devices.

The measurements and data reported in this text are to be considered, unless otherwise indicated, as performed in the International Standard Atmosphere ICAO (ISO 2533:1975).

With reference to the Figures, the device according to the invention is globally indicated with number **1.** In particular, it is a conveying device for harvester header **10.** The device 1, therefore, can be a part of a harvester header 10 that performs the function of harvesting cereals in the reaping and shredding phases. In detail, the harvester header 10 can be housed on a combine harvester or a forage harvester, which carries out both the reaping of the plants, and the threshing or shredding.

In detail, the device 1 comprises a conveyor belt **2.** It is suitable for transporting material placed above. For example, the material may comprise crop plants. For example, the crop plants may comprise various types of cereals.

The conveyor belt 2 can transport the plants already cut by the mowing bar and carried on it by the reel.

The conveyor belt 2 comprises an outer transport portion **2b.** It is a movable portion along a sliding direction **2a.** The sliding direction 2a is the direction along which the conveyor belt 2 slides and corresponds to the direction along which the material is transported. Therefore, the outer transport portion 2b is the portion on which part of the harvested material, dust and land are transported along the sliding direction 2a and conveyed towards the central part of the header 10. The outer transport portion 2b may be a substantially planar portion. It can also comprise raised portions, at which the conveyor belt 2 has a greater thickness than the other parts, which facilitate positioning the material and prevent it from slipping on the conveyor belt 2, so that it is transported more efficiently. These portions may have a development mainly along a direction perpendicular to the sliding direction 2a.

The outer transport portion 2b comprises an edge portion **20.** It is a portion substantially aligned with the sliding direction 2a.

For example, in a harvester header 10, the edge portion 20 thus corresponds to one end of the outer transport portion 2b.

The edge portion 20 defines a contour line **20a.** It constitutes the boundary line of the outer transport portion 2b.

The contour line 20a is variable along the sliding direction 2a. The variation of the contour line 20a and of the edge portion 20 is to be understood as a variation whose average joins two points aligned along the sliding direction 2a. In detail, moving along the sliding direction 2a, the contour line 20a varies in a direction perpendicular to the sliding direction 2a. This variation may be uniform along the thickness of the conveyor belt 2. This conformation of the edge portion 20 means that along the contour line 20a there are spaces in which the material can be picked when it accidentally falls on the edges of the conveyor belt 2. In this way, accumulations of material can be reduced and the residence time of the material is reduced when it partly pours out of the conveyor belt 2 in particular into the cavity **31.**

In this regard, the contour line 20a preferably comprises a plurality of recesses **20b.** They extend mainly along a direction perpendicular to the sliding direction 2a. The recesses 20b are thus indentations of the edge portion 20. The recesses 20b allow the material falling onto the edge portion 20 and into the cavity 31 to be picked more effectively.

The presence of more recesses 20b causes the material poured on the edge portion 20 and in the cavity 31 to be distributed inside the recesses 20b and prevents accumulations that could hinder the efficient transport of the material and the sliding of the conveyor belt 2.

The recesses 20b are preferably arranged in regular sequence along the contour line 20a. In this way, the portions between the recesses 20b advantageously allow a more effective pushing action to be carried out on the material present inside the recesses 20b and the cavities 31 and to move it along the sliding direction 2a. In fact, the portions interposed between consecutive recesses 20b can have an extension in the sliding direction 2a sufficient to ensure that they have a mechanical resistance such as to reduce the risk of deformations. In this way, the portions interposed between pairs of consecutive recesses 20b can exert a better pushing action on the material present inside the recesses 20b and the cavities 31.

The sequential arrangement of the recesses 20b means that the material present in the edge portion 20 and/or in the cavity 31 is advantageously better distributed between the recesses 20b in translation along the sliding direction 2a.

The recesses 20b preferably define a semi-circular contour, or rectangular one or any other shape in the contour line 20a. This shape of the recesses 20b is advantageous since it makes it possible to more effectively collect the material deposited on the edge portion 20 and in the cavity 31. Furthermore, the semi-circular shape means that the recesses 20b do not have inner edges that could weaken the structure of the conveyor belt 2.

The device 1 comprises a support structure **3.** It is a structure configured to support the conveyor belt 2. In particular, it can contain and support the conveyor belt 2. In particular, the support structure 3 comprises a supporting element **30.** It is adapted to house the edge portion 20. In this regard, the supporting element 30 defines a cavity **31.** It is a cavity configured to contain the edge portion 20. In particular, inside the cavity 31 the edge portion 20 can slide as the conveyor belt 2 is moved along the sliding direction 2a.

In this regard, the cavity 31 is mainly extended along the sliding direction 2a. Therefore, it can have a longitudinal shape, within which the edge portion 20 can transit.

The cavity 31 defines an opening **31a.** It is an opening that allows access to the cavity 31. In particular, the opening 31a extends mainly along the sliding direction 2a. For example, it can extend along the entire extension of the supporting element 30 in the sliding direction 2a. Furthermore, the opening 31a may extend perpendicularly to the sliding direction 2a in such a way as to allow the edge portion 20 to be housed inside the cavity 31.

The opening 31a preferably comprises a first end **32** and a second end **33.** They are mutually opposite and aligned along the sliding direction 2a. For example, the first end 32 and the second end 33 can be openings orthogonal to the sliding direction 2a, which allow access of the edge portion 20 inside the opening 31a by means of the ends 32 and 33. In general, the ends 32 and 33 may also have a different orientation with respect to the plane orthogonal to the sliding direction 2a, as long as it allows the insertion and sliding therein of the edge portion 20.

The opening 31a may extend mainly along a surface parallel to the sliding direction 2a. In general, the opening 31a may extend substantially along a surface parallel to the sliding direction 2a. In this regard, the edges of the supporting element 30 defining the edges of the opening 31a may also have a variable contour, which on average extends along the sliding direction 2a.

The opening 31a is preferably accessible along the sliding direction 2a at the first end 32 and the second end 33. In particular, the edge portion 20 can slide along the sliding direction 2a in such a way as to transit in the cavity 31 entering the opening 31a at the first end 32 and exiting the opening 31a from the second end 33. At the ends 32 and 33 the opening 31a may therefore have portions oriented transversely to the sliding direction 2a.

The cavity 31 is closed except for access along the opening 31a. Therefore, when the material transported by the conveyor belt 2 is partly poured onto the edge portion 20 and enters the free interstices between the edge portion 20 and the cavity 31, it is not dispersed by falling, since the cavity 31 is only accessible from the opening 31a.

The cavity 31 can in fact be closed by means of closing portions that seal the inner walls, or it can be made as one piece.

For example, the cavity 31 may preferably define a C-shaped profile in a plane orthogonal to the sliding direction 2a. This geometry allows an easier realization and a lower constructional complexity of the supporting element 30 and of the cavity 31. In fact, the C-shaped profile in the plane orthogonal to the sliding direction 2a means that the supporting element 30 can have substantially constant dimensions along its extension along the sliding direction 2a. Furthermore, the conveyor belt 2 may preferably have constant thickness in a plane orthogonal to the sliding direction 2a. In this way, the sliding can take place more evenly and the material can be transported more efficiently.

Advantageously, the recesses 20b and the supporting element 30 are preferably mutually placed so that, during the movement of the conveyor belt 2, the recesses 20b that are within the supporting element 30 are entirely located within the cavity 31. In this way, the recesses 20b can perform the function of selectively transporting the material that is inside the cavity 31. In fact, if the recesses 20b were also located partially outside the cavity 31, they would promote the accumulation of material towards the edge portion 20, making its transport more complicated. The recesses 20b placed entirely inside the cavity 31 allow the material present therein to be collected and, by means of the sliding movement of the conveyor belt 2 along the sliding direction 2a, favour its transport outside the cavity 31. The recesses 20b, therefore, advantageously perform the function of recovering the material present inside the cavity 31 and of re-introducing it into the main transport flow on the conveyor belt 2.

In this regard, each of the recesses 20b, when transiting within the cavity 31, forms with it an inner cavity **34.** It substantially corresponds to the volume occupied by each recess 20b when it is inside the cavity 31.

Within each inner cavity 34 the material may be conveyed and transported so as to be transported outside the cavity 31.

Thus, the cavities 34 perform the primary function of transporting the material towards the central conveyor belt.

The transport of the material from the inside of the cavity 31 to the outside of the supporting element 30 can also take place in part by dragging by friction the material between the inner walls of the cavity 31 and the edge portion 20, due to the movement of the conveyor belt 2.

As partly anticipated, the invention further comprises a harvester header 10. It can be a harvester header housed on a combine harvester. It may comprise a reel and mowing bars for reaping. The harvester header 10 comprises a device 1.

Configurations of the harvester header 10 in which a plurality of devices 1 are present are possible.

For example, the harvester header 10 may comprise two devices 1 connected to a central harvesting portion. The two devices 1 can be arranged such that the respective outer transport portions 2b are parallel and aligned along the sliding direction 2a. The two conveyor belts 2 can be moved in such a way as to slide in opposite directions. In particular, a central transport portion can be placed between the two conveyor belts 2, which makes it possible to convey the material transported by the two conveyor belts 2 towards the units in which harvest is performed. The two conveyor belts follow a direction of advancement directed towards the central harvesting portion. The latter may consist of a second conveyor belt moved in a direction orthogonal to the sliding direction 2a that allows the material to be conveyed from the harvester header 10 towards the threshing or shredding units. The harvester headers 10 may preferably be configured for harvesting various cereals. In fact, in these cases, the harvested material consists of small grains that can be poured into the cavity 31. Therefore, materials of this type are advantageously recoverable by the device 1 and the harvester header 10.

The harvester header 10, therefore, has the advantage of reducing the dispersion of material and preventing it from remaining inside the cavity 31 for long times, in particular when it is made up of a plurality of small bodies.

The operation of the device 1 and the harvester header 10 previously described in structural terms is as follows.

During the harvesting phase, the plants to be harvested, such as soybean, wheat, sorghum, etc., can be conveyed by the reel and cut by the mowing bar, during the advancement of the combine harvester. The harvested material is brought, as a result of the movement of the reel, on the device 1. The material is transported on the outer transport portion 2b. During transport due to the movement of the conveyor belt 2, the harvested material may partly fall back on the edge portion 20 and end up inside the cavity 31 passing through the opening 31a. Since the cavity 31 is accessible only from the opening 31a, the material present therein is not dispersed and is not subject to falls outside the device 1. The material is transported inside the inner cavities 34 and is transported towards the central conveyor belt by the movement of the edge portion 20 along the sliding direction 2a. In particular, the material is brought out of the cavity 31 through the second end 33.

The device 1 in the harvester header 10 according to the invention achieves important advantages.

In fact, the device 1 makes it possible to improve the material harvesting efficiency. In fact, by reducing potential losses, due to the conformation of the device 1, the risk of losing part of the harvested material is reduced. As a result, the harvester header 10 allows harvesting crop products such as various cereals by reducing the amount of material lost during the reaping phase.

The device 1 also makes it possible to prevent the material that has escaped from the main transport flow from getting trapped in peripheral areas of the device 1. In fact, the presence of the recesses 20b in the edge portion 20 allows the material initially present inside the cavity itself to be moved and transported out of the cavity 31.

In this way, the device 1 makes it possible to improve the material harvesting efficiency, reducing losses and frictions between the belt portion 20 and the supporting parts 30.

Furthermore, the device 1 has the further advantage of easier maintenance, since it is easier to remove any residual material remaining inside the cavities 31.

The device 1 and the harvester header 10 also make it possible to convey the plants more effectively during reaping, i.e. with less losses and less clogging of the transport members. The invention can be modified to create different versions falling within the scope of the inventive concept defined by the claims.

## Claims

1. Conveying device (1) for harvester header (10) for combine harvester or forage harvester including:
- a conveyor belt (2), including an outer conveyor portion (2b) movable along a sliding direction (2a) and suitable for transporting material placed above,
- said outer conveyor portion (2b) including an edge portion (20) substantially aligned with said sliding direction (2a) and defining a contour line (20a) constituting the boundary line of said outer conveyor portion (2b),
- a support structure (3) configured to support said conveyor belt (2), including a supporting element (30) suitable for housing said edge portion (20),
- said supporting element (30) defining:
- a cavity (31) configured to contain said edge portion (20);
- said cavity (31) being mainly extended along said sliding direction (2a) and defining:
- an opening (31a), which allows access to said cavity (31),
- said opening (31a) extending mainly along said sliding direction (2a) and comprising a first end (32) and a second end (33) mutually opposite and aligned along said sliding direction (2a);
- said cavity (31) is closed except for said access along said opening (31a); and **characterized in that**:
- said contour line (20a) is variable along said sliding direction (2a) in a direction perpendicular to said sliding direction (2a).

2. Device (1) according to Claim 1, wherein said contour line (20a) comprises a plurality of recesses (20b) extending mainly along a direction perpendicular to said sliding direction (2a).

3. Device (1) according to the previous claim, wherein said recesses (20b) are arranged in substantially regular sequence along said contour line (20a).

4. Device (1) according to Claim 2 or 3, wherein said recesses (20b) and said supporting element (30) are mutually placed so that, during the movement of said conveyor belt (2), said recesses (20b) that are within said supporting element (30) are entirely located within said cavity (31).

5. Device (1) according to any of the preceding claims, wherein said opening (31a) is accessible along said sliding direction (2a) at said first end (32) and said second end (33), said edge portion (20) sliding along said sliding direction (2a) so that it passes through said cavity (31) by entering said first end (32) and exiting from said second end (33).

6. Device (1) according to any of the preceding claims, wherein said cavity (31) defines a C-shaped contour in a plane orthogonal to said sliding direction (2a).

7. Device (1) according to at least Claim 2, wherein each of said recesses (20b), when transiting within said cavity (31), forms with it an internal cavity (34) wherein said material can be conveyed and transported so as to be transported outside said cavity (31).

8. Device (1) according to at least Claim 2 or 7, wherein said recesses (20b) define a semicircular contour in said contour line (20a).

9. Device (1) according to any of the preceding claims, wherein said conveyor belt (2) has constant thickness in a plane orthogonal to said sliding direction (2a).

10. Harvester header (10) for combine harvester or forage harvester comprising said device (1) according to any of the preceding claims.

## Patentansprüche

1. Fördervorrichtung (1) für Schneidwerk (10) für Mähdrescher oder Feldhäcksler, umfassend:
- ein Förderband (2), umfassend einen äußeren Förderabschnitt (2b), beweglich entlang einer Gleitrichtung (2a) und geeignet zum Transportieren von darauf angeordnetem Material,
- wobei der äußere Förderabschnitt (2b) einen Randabschnitt (20) umfasst, der im Wesentlichen mit der Gleitrichtung (2a) ausgerichtet ist und eine Konturlinie (20a) definiert, die die Begrenzungslinie des äußeren Förderabschnitts (2b) bildet,
- eine Tragstruktur (3), ausgelegt zum Tragen des Förderbands (2), umfassend ein Tragelement (30), geeignet zum Aufnehmen des Randabschnitts (20),
- wobei das Tragelement (30) definiert:
- eine Kavität (31), ausgelegt zum Aufnehmen des Randabschnitts (20);
- wobei sich die Kavität (31) im Wesentlichen entlang der Gleitrichtung (2a) erstreckt und definiert:
- eine Öffnung (31a), die den Zugang zu der Kavität (31) ermöglicht,
- wobei sich die Öffnung (31a) im Wesentlichen entlang der Gleitrichtung (2a) erstreckt und ein erstes Ende (32) und ein zweites Ende (33) umfasst, die einander gegenüberliegend und entlang der Gleitrichtung (2a) ausgerichtet sind;
- wobei die Kavität (31) mit Ausnahme des Zugangs entlang der Öffnung (31a) geschlossen ist;
**und dadurch gekennzeichnet, dass:**
- die Konturlinie (20a) entlang der Gleitrichtung (2a) in einer Richtung senkrecht zur Gleitrichtung (2a) veränderlich ist.

2. Vorrichtung (1) nach Anspruch 1, wobei die Konturlinie (20a) eine Vielzahl von Ausnehmungen (20b) umfasst, die sich im Wesentlichen entlang einer zur Gleitrichtung (2a) senkrechten Richtung erstrecken.

3. Vorrichtung (1) nach dem vorhergehenden Anspruch, wobei die Ausnehmungen (20b) im Wesentlichen in regelmäßiger Folge entlang der Konturlinie (20a) angeordnet sind.

4. Vorrichtung (1) nach Anspruch 2 oder 3, wobei die Ausnehmungen (20b) und das Tragelement (30) derart zueinander angeordnet sind, dass während der Bewegung des Förderbands (2) die Ausnehmungen (20b), die sich innerhalb des Tragelements (30) befinden, vollständig innerhalb der Kavität (31) angeordnet sind.

5. Vorrichtung (1) nach einem der vorhergehenden Ansprüche, wobei die Öffnung (31a) entlang der Gleitrichtung (2a) an dem ersten Ende (32) und dem zweiten Ende (33) zugänglich ist, wobei der Randabschnitt (20) entlang der Gleitrichtung (2a) gleitet, so dass er durch die Kavität (31) hindurchtritt, indem er an dem ersten Ende (32) eintritt und an dem zweiten Ende (33) austritt.

6. Vorrichtung (1) nach einem der vorhergehenden Ansprüche, wobei die Kavität (31) in einer zur Gleitrichtung (2a) orthogonalen Ebene eine C-förmige Kontur definiert.

7. Vorrichtung (1) nach zumindest Anspruch 2, wobei jede der Ausnehmungen (20b), während sie sich innerhalb der Kavität (31) bewegt, mit dieser eine innere Kavität (34) bildet, in der das Material gefördert und transportiert werden kann, so dass es außerhalb der Kavität (31) transportiert wird.

8. Vorrichtung (1) nach zumindest Anspruch 2 oder 7, wobei die Ausnehmungen (20b) eine halbkreisförmige Kontur in der Konturlinie (20a) definieren.

9. Vorrichtung (1) nach einem der vorhergehenden Ansprüche, wobei das Förderband (2) in einer zur Gleitrichtung (2a) orthogonalen Ebene eine konstante Dicke aufweist.

10. Schneidwerk (10) für Mähdrescher oder Feldhäcksler, umfassend die Vorrichtung (1) nach einem der vorhergehenden Ansprüche.

## Revendications

1. Dispositif de convoyage (1) pour barre de coupe de moissonneuse (10) pour moissonneuse-batteuse ou pour ensileuse comprenant :
- une bande transporteuse (2), comprenant une portion de convoyage externe (2b) mobile selon une direction de coulissement (2a) et adaptée pour transporter du matériau placé au-dessus,
- ladite portion de convoyage externe (2b) comprenant une portion de bord (20) sensiblement alignée avec ladite direction de coulissement (2a) et définissant une ligne de contour (20a) constituant la ligne de limite de ladite portion de convoyage externe (2b),
- une structure de support (3) configurée pour supporter ladite bande transporteuse (2), comprenant un élément de support (30) adapté pour loger ladite portion de bord (20),
- ledit élément de support (30) définissant :
- une cavité (31) configurée pour contenir ladite portion de bord (20) ;
- ladite cavité (31) étant principalement étendue selon ladite direction de coulissement (2a) et définissant :
- une ouverture (31a), qui permet l'accès à ladite cavité (31),
- ladite ouverture (31a) s'étendant principalement selon ladite direction de coulissement (2a) et comprenant une première extrémité (32) et une seconde extrémité (33) mutuellement opposées et alignées selon ladite direction de coulissement (2a) ;
- ladite cavité (31) est fermée sauf pour ledit accès le long de ladite ouverture (31a)
**et caractérisé en ce que :**
- ladite ligne de contour (20a) est variable le long de ladite direction de coulissement (2a) dans une direction perpendiculaire à ladite direction de coulissement (2a).

2. Dispositif (1) selon la revendication 1, dans lequel ladite ligne de contour (20a) comprend une pluralité de renfoncements (20b) s'étendant principalement selon une direction perpendiculaire à ladite direction de coulissement (2a).

3. Dispositif (1) selon la revendication précédente, dans lequel lesdits renfoncements (20b) sont disposés en séquence sensiblement régulière le long de ladite ligne de contour (20a).

4. Dispositif (1) selon la revendication 2 ou 3, dans lequel lesdits renfoncements (20b) et ledit élément de support (30) sont disposés mutuellement de sorte que, pendant le mouvement de ladite bande transporteuse (2), lesdits renfoncements (20b) qui se trouvent à l'intérieur dudit élément de support (30) sont entièrement situés à l'intérieur de ladite cavité (31).

5. Dispositif (1) selon l'une quelconque des revendications précédentes, dans lequel ladite ouverture (31a) est accessible le long de ladite direction de coulissement (2a) à ladite première extrémité (32) et à ladite seconde extrémité (33), ladite portion de bord (20) coulissant selon ladite direction de coulissement (2a) de sorte qu'elle passe à travers ladite cavité (31) en entrant par ladite première extrémité (32) et en sortant par ladite seconde extrémité (33).

6. Dispositif (1) selon l'une quelconque des revendications précédentes, dans lequel ladite cavité (31) définit un contour en forme de C dans un plan orthogonal à ladite direction de coulissement (2a).

7. Dispositif (1) selon au moins la revendication 2, dans lequel chacun desdits renfoncements (20b), lors du transit à l'intérieur de ladite cavité (31), forme avec celle-ci une cavité interne (34) dans laquelle ledit matériau peut être convoyé et transporté de manière à être transporté à l'extérieur de ladite cavité (31).

8. Dispositif (1) selon au moins la revendication 2 ou 7, dans lequel lesdits renfoncements (20b) définissent un contour semi-circulaire dans ladite ligne de contour (20a).

9. Dispositif (1) selon l'une quelconque des revendications précédentes, dans lequel ladite bande transporteuse (2) présente une épaisseur constante dans un plan orthogonal à ladite direction de coulissement (2a).

10. Barre de coupe (10) pour moissonneuse-batteuse ou ensileuse comprenant ledit dispositif (1) selon l'une quelconque des revendications précédentes.
